# EUROPÄISCHE PATENTSCHRIFT

(11) **EP 1 694 974 B1**
(45) Veröffentlichungstag und Bekanntmachung des Hinweises auf die Patenterteilung: **17.03.2010**
(21) Anmeldenummer: 04802882.3
(22) Anmeldetag: 06.12.2004
(51) Int. Cl.: F16C 35/067, F16C 33/58, F16C 19/18, B60B 27/00

(54) **RADLAGER IN EINEM RADTRÄGER**
WHEEL BEARING IN A WHEEL CARRIER
ROULEMENT DE ROUE DANS UN SUPPORT DE ROUE

(30) Priorität: 18.12.2003 DE 10359646
(43) Veröffentlichungstag der Anmeldung: 30.08.2006
(73) Patentinhaber: Schaeffler KG, 91074 Herzogenaurach (DE)
(72) Erfinder: NIEBLING, Peter, 97688 Bad Kissingen (DE); HEIM, Jens, 97493 Bergrheinfeld (DE); HOFMANN, Heinrich, 97422 Schweinfurt (DE); LANGER, Roland, 97523 Schwanfeld (DE); DLUGAI, Darius, 97422 Schweinfurt (DE); DÖPPLING, Horst, 91074 Herzogenaurach (DE); STEINBERGER, Wolfgang, 91074 Herzogenaurach (DE)
(86) Internationale Anmeldenummer: PCT/DE2004/002674
(87) Internationale Veröffentlichungsnummer: WO 2005/059388

(56) Entgegenhaltungen:
- EP-A- 0 418 532
- WO-A-95/13198
- WO-A-99/02873
- DE-U1- 8 702 275
- US-A1- 2002 015 545

## Beschreibung

### Gebiet der Erfindung

Die Erfindung betrifft ein Radlager in Kombination mit einem Radträger, wobei das Radlager zumindest einen Außenring und mindestens eine Reihe Wälzkörper aufweist, wobei das Radlager zumindest an einem zylindrischen Abschnitt des Außenringes zumindest radial zur Rotationsachse in dem Radträger abgestützt ist, und wobei der Außenring einen radial von der Rotationsachse wegweisenden Flansch aufweist, der axial endseitig des Außenrings ausgebildet und axial an dem Radträger befestigt ist.

### Hintergrund der Erfindung

In DE39 40 395 A1 sind übliche Anordnungen von Radlagerungen beschrieben. Radlagerungen sind entweder vollständig in einem Radträger o. ä. aufgenommen oder sind an einem Flansch aufgehängt. Untersuchungen ergaben, dass die Radmodule mit Radlagern, die in der Regel über einen Flansch am Außenring am Radträger aufgehängt sind, einen höheren Gewichtsanteil an den ungefederten Massen aufweisen, als Radlagerungen, die in einer Bohrung eines Radträgers angeordnet sind. Die Konstruktion der am Radträger aufgehängten und somit zumindest teilweise freitragenden Radlager und deren Aufhängung ist besonders steif zu gestalten, woraus sich der erhöhte Gewichtsanteil im Vergleich zu den in Bohrungen aufgenommenen Radlagerungen ergibt. So beschreibt DE 39 40 395 A1 eine Radlagerung mit einem Außenring, Wälzkörpern und mit zwei Innenringen, deren Außenring axial zwischen den Stirnseiten und von den Stirnseiten weg einen radialen Flansch aufweist. Mit dem Flansch ist die Radlagerung am Radträger aufgehängt. Das Radlager ist somit über den Flansch axial und radial am Radträger fest.

Ein sich dem Flansch axial anschließender hohlzylindrischer Abschnitt des Außenringes sitzt außerdem in einem Loch des Trägers, so dass der Außenring mittels des Flansches axial und zumindest mit dem Abschnitt teilweise radial an dem Träger anliegt. Der Außenring ist in der Kehle an dem Übergang von dem Flansch zu dem Abschnitt hoch belastet. Die Kehle ist deshalb gewöhnlich mit einem Radius verrundet, durch die Kerbspannungen in der Kehle gesenkt werden sollen. Die in der Kehle vorherrschenden Spannungen sind jedoch nach wie vor zu hoch, zumal der Außenring auch über die Kehle an dem Träger anliegt und dadurch zusätzliche Spannungen in dem Flansch unter Last aufgebaut werden.

DE 39 40 395 A1 beschreibt weiter ein Radlager, das vollständig in einem Loch eines Radträgers aufgenommen ist. Der Außenring ist massiv ausgebildet und durch spanabhebende Bearbeitung hergestellt. Ein in der Wälzlagerbranche üblicher Presssitz sichert den Außenring in dem Loch. Bei Belastungen des Radlagers im Fahrbetrieb neigt der Außenring trotz des Presssitzes zum axialen Wandern. Dagegen ist der Außenring axial an einer Seite mit einem Sicherungsring in dem Loch gesichert und stützt sich an der anderen Seite an einer Innenschulter ab. Die Vorbereitung eines derartigen Lagersitzes ist aufwendig, da die Schulter spanabhebende Bearbeitungen in axiale Richtung erschwert. Weiterhin ist der Einstich für den Sicherungsring einzubringen. Oft lockert sich auch der Presssitz im Fahrbetrieb, so dass am Träger oder am Außenring Kerben durch Verschleiß entstehen und/oder die bekannten und unerwünschten Knackgeräusche durch die Mikrobewegungen des Außenringes zum Träger auftreten. Derartige Sitze lockern sich auch, wenn der Radträger aus einen anderen Material gefertigt ist als der Außenring. Das betrifft z.B. Anordnungen, bei denen der Radträger aus einer Aluminiumlegierung und der Außenring aus Stahl ist. Die unterschiedlichen Materialkennwerte, wie Elastizitätsmodul und Wärmedehnungskoeffizient, des Radträgers zum Außenring, wirken sich nachteilig auf einen dauerhaften Festsitz des Außenringes in dem Radträger aus.

Es sind Radlagereinheiten bekannt (US3,757,883), bei denen der Innenring und/oder der Außenring kalt aus Blech geformt sind. Die Außenringe sind um die Rotationsachse der Radlagereinheit hohlzylindrisch ausgebildet und weisen jeweils zwei Laufbahnen für Wälzkörper auf. Der Außenring weist an seiner von den Laufbahnen abgewandten Seite einen radial nach außen gerichteten Flansch auf, mit dem die Radlagerung fahrzeugseitig fest ist. Der Innenring ist als Nabe mit einem gleichfalls nach außen gerichteten Anschlussflansch versehen, an dem die Bremsscheibe sowie das über den inneren Außenring angetriebene Rad eines Fahrzeuges befestigt sind. Die Laufbahnen sind radial zumindest teilweise vertieft in den jeweiligen Lagerring eingebracht und durch Schultern voneinander getrennt. An den radial von den Laufbahnen abstehenden Schultern laufen die Laufbahnen des Schrägkugellagers aus.

Die spanlos aus Blech hergestellten Außenringe sind besonders massiv ausgebildet, da das Lager an einem radialen Flansch des Außenringes frei zum Fahrzeug befestigt ist. Das Gewicht der Ringe wirkt sich nachteilig auf die Gesamtbilanz der am Fahrzeug ungefederten Massen aus. Aufgrund ihrer Dickwandigkeit sind die Außenringe zudem relativ steif, so dass ein unter Umständen gewünschtes elastisches Einfedern der Außenringe ausgeschlossen ist. Eine derartige Lageranordnung ist aufgrund der hohen Steifigkeit der Außenringe nur äußerst schwer spielfrei vorzuspannen.

Aus EP 0 418 532 A1 ist ein gattungsgemäßes Radlager mit einem zweireihigen Kegelrollenlager bekannt, dessen Außenring radial und axial am Radträger anliegt und mit diesem verschraubt ist.

Aus WO 1995/13198 A1 ist ein Radlager mit einem zweireihigen Kegelrollenlager bekannt, dessen Außenring axial an einem Rad tragenden Teil anliegt und über eine Bremsanordnung mit diesem verschraubt ist.

Aus US 2002/0015545 A1 ist ein Radlager auf der Basis eines zweireihigen Kegelrollenlagers bekannt, dessen Außenring radial an einem Rad tragenden Teil anliegt und dieses umgreift.

Aus DE 87 0 2 275,3 ist ein symmetrisches, zweireihiges Kugellager bekannt, welches ohne zusätzliche Hilfsmittel zusammengehalten wird, und dessen Außenring ebenfalls zur radialen Anlage an einem Rad tragenden Teil vorgesehen ist.

### Zusammenfassung der Erfindung

Die Aufgabe der Erfindung ist es daher, ein Radlager zu schaffen, mit dessen Einbau die zuvor genannten Nachteile vermieden sind, mit dem insbesondere ein Beitrag zur Materialeinsparung und zur Reduzierung des Gewichtes ungefederter Massen geleistet wird und dessen Festsitz in dem Radträger dauerhaft gewährleistet ist.

Diese Aufgabe ist nach dem Gegenstand des Anspruches 1 gelöst.

Demnach ist der Abschnitt des Außenringes, an dem zumindest teilweise Laufbahnen für eine oder mehrere Reihen Wälzkörper ausgebildet sind, radial vollständig in dem Radträger abgestützt. Dadurch ist in der Regel das gesamte Radlager von dem Radträger umfasst. Der Flansch ist axial endseitig des Außenringes ausgebildet und geht an einem Ende der Bohrung radial nach außen ab. Der Flansch liegt entweder direkt axial an dem Radträger an oder stützt sich über Distanzmittel axial an dem Radträger ab. Über den Flansch ist das Radlager axial in dem Loch zum Träger gesichert, da der Flansch mit geeigneten Befestigungsmitteln an dem Flansch befestigt ist. Das axiale Wandern des Außenringes im Fahrbetrieb ist vermieden. Der Außenring sitzt fest in dem Träger, wodurch die Knackgeräusche vermieden sind. Außerdem ist die Kehle an dem Übergang vom Flansch zu dem Außenring von vorneherein entlastet, da der Außenring sich unter Last radial in dem Radträger abstützt. Das Loch in dem Träger ist einfach spanabhebend zu bearbeiten. Eine Schulter für die axiale Anlage und Einstiche für Sicherungsringe müssen nicht mehr eingebracht werden.

Unter Radträger sind in diesem Sinne alle Anschlusskonstruktionen für Radlagermodule und Radlagereinheiten angetriebener und nicht angetriebener Räder zu verstehen, an/in denen die Radlagermodule bzw. Radlagereinheiten befestigt sind. Die gegossenen oder geschmiedeten bzw. auf andere geeignete Art hergestellten Radträger sind aus allen denkbaren Materialien, also aus Stahl und/oder zumindest um das Loch zur Aufnahme der Radlagerung aus Aluminiumlegierungen hergestellt. Ein gemäß Erfindung mittels des Flansches des Außenringes am Radträger axial festes Radlager ist axial auch fest, wenn sich der Radialsitz des Radlagers z.B. in einem Träger aus einer Aluminiumlegierung radial aufgrund der anfangs erwähnten Einflussfaktoren gelockert hat.

Unter Radlager sind in diesem Sinne alle ein-, zwei- und mehrreihigen Radlager mit Rollen und/oder Kugeln als Wälzkörper, mit einem oder mehr ein- bzw. mehrteiligen Innenringen zu verstehen, die in den unterschiedlichsten Anordnungen, wie in Radial- oder Schrägkugellageranordnung bzw. wie in Radial- oder Schrägrollenlageranordnung ausgeführt sind. Alternativ ist eine oder sind alle der Innenlaufbahnen nicht an einem/mehreren Innenringen sondern direkt an einer in dem Radlager gelagerten Nabe ausgebildet.

Die Nabe eines Radlagermoduls für ein getriebenes oder nicht getriebenes Rad ist vor dem Einbau der Radlagerung in den Radträger in dem Radlager zum Beispiel durch einen Bördelbord an dem Lager fest. Der Bördelbord hintergreift dabei die Lageranordnung so, dass die Nabe untrennbar von dem Radlager an dem Radlager fest ist. Alternativ dazu wird die Nabe bzw. ein Bolzen, mit dem das Rad in der Radlagerung drehbar zum Radträger gelagert ist, erst eingesetzt, wenn das Radlager an dem Träger fest ist.

Die Erfindung sieht weiter vor, dass der Außenring relativ dünnwandig und somit im Vergleich zu dem steifen, das Loch umgebende Gehäuse elastisch ist. Die Wand des Außenringes weist dünne Querschnitte auf. So ist der Außenring, insbesondere ein durch Kaltumformen gefertigter, partiell gehärteter oder insgesamt gehärteter Ring oder ein beliebig gefertigter Außenring ohne spanabhebende Nacharbeit nach dem Härten, als Einzelteil außen und insbesondere innen an den Laufbahnen so in sich instabil oder unrund, dass die für den Wälzkontakt notwendige optimale Geometrie zunächst nicht verwirklicht ist. Das betrifft insbesondere den Durchmesser und die Rundheit des quer zur Rotationsachse betrachteten Abschnittes, mit dem der Außenring in das Loch eingepresst ist, vor der Montage in den Radträger. Unter optimaler Geometrie ist in diesem Falle die Rundheit der Laufbahnen im Wälzkontakt zu verstehen, die optimale Wälzverhältnisse im Lager absichert. Derartige Formgenauigkeiten werden üblicherweise an massiven spanabhebend bearbeiteten Lagerringen und den Gehäusebohrungen zur Aufnahme der Lagerringe durch Drehen und Schleifen erzeugt. Die Herstellung derartiger Geometrie ist zeitaufwändig und teuer. Die Erfindung sieht jedoch vor, dass die fertige Kontur des Außenringes, zumindest an dem Abschnitt, die genannten Abweichungen von der optimalen Geometrie aufweist. Das Loch des Trägers entspricht aufgrund seiner durch Spanabheben erzeugten Geometrie den optimalen Anforderungen.

Die Abweichungen der Außenkontur des Außenringes von der optimalen Geometrie werden durch das elastische - teils plastische Verhalten des Außenringes ausgeglichen, wenn der Außenring in das Loch eingepresst ist. Dazu weist der Außenring zunächst wenigsten an dem Abschnitt einen Außendurchmesser auf, der größer ist als der Innendurchmesser des Loches. Das Übermaß ist auch für den Presssitz erforderlich, mit dem der Außenring im Träger sitzt. Durch das Einpressen in das Loch schnürt sich der Außenring radial nach innen ein und passt sich den Rundheiten des Loches an. Die Formgenauigkeiten des Loches und auch das Übermaß übertragen sich nahezu vollständig auf die Geometrie der Laufbahnen, da das Gehäuse des Trägers im Vergleich zum Außenring starr ist. Das Loch in dem vergleichsweise zu dem Außenring starren Radträger weist, wenn das Radlager in dem Loch sitzt, im Wesentlichen seine Ausgangsgeometrie vor dem Einpressen des Radlagers auf. Die funktionsbedingten Rundheiten an der Laufbahn sind an dem Außenring somit erst dann hergestellt, wenn der Außenring in das Loch eingepresst ist. Außerdem ist die elastische Formänderung u. a. auch für die notwendige Spielfreiheit der Radlagerung vorteilhaft, wenn das Radlager komplett als Einheit montiert wird.

Der Außenring ist mit dem Flansch vorzugsweise einteilig ausgebildet, der Flansch kann aber auch an dem Außenring durch Schweißen oder durch einen kraftschlüssigen und/oder formschlüssigen Sitz befestigt sein. Eine Ausgestaltung der Erfindung sieht vor, dass der Außenring aus umgeformten Material gebildet ist. Die Gestalt des Außenringes mit allen seinen Formelementen ist demnach alternativ auch durch Umformen hergestellt. Trennende oder spanabhebende Bearbeitung ist in diesem Fall nur auf einen sehr geringen Umfang der Bearbeitung im Vergleich zum Umfang der spanlosen Bearbeitung begrenzt. So sind durch Trennen bzw. Lochen nur überschüssiges Material, Ränder, Grate oder weiter Ähnliches vom Formteil entfernt. Spanabhebend sind gegebenenfalls nur die Laufbahnen durch Feinbearbeitung wie Schleifen, Läppen oder Polieren nachgearbeitet. Unter dem Begriff Kaltumformen sind alle die Umformverfahren zu verstehen, bei denen die Kontur des hohlen Außenringes durch Dehnen oder Stauchen, Aufweiten bzw. Einschnüren und dabei plastische Formänderung des Ausgangsmateriales ohne Werkstofftrennung herstellbar sind. Derartige Verfahren sind z. B. Ziehen, Tiefziehen, Rollieren, Pressen und Kombinationen der vorgenannten Verfahren.

Als Rohlinge für die Herstellung der Außenringe sind z. B. Rohre und Bleche vorgesehen. Ein Rohling aus einem Rohr ist durch Aufweiten, Rollieren, Einschnüren, Stauchen und Umlegen von Rändern zu dem fertigen Außenring bearbeitet. Aus Blech hergestellte Außenringe sind durch Ziehen und weitere einzelne bzw. Kombinationen der vorgenannten Verfahren hergestellt. In diesem Fall sieht eine Ausgestaltung der Erfindung vor, dass der Flansch axial von der Stirnseite des Außenringes bis an den Radträger, an dem der Flansch anliegt, genauso breit ist wie das Ausgangsmaterial des Bleches vor dem Herstellen des Außenringes dick war. Bevorzugte Werkstoffe sind kaltformbare Lagerwerkstoffe wie z. B. 100Cr6 oder auch alle geeigneten Tiefziehstähle.

Der Außenring weist folgende durch Kaltumformen erzeugte Formelemente auf:
- einen um eine Rotationsachse der Radlagereinheit hohlzylindrisch ausgebildeten Grundkörper mit dem Abschnitt oder mit mehreren der Abschnitte,
- wenigstens zwei Laufbahnen für Wälzkörper,
- zumindest einen von dem Außenring radial zur Rotationsachse abgehenden Flansch, wobei der Flansch einteilig mit dem Blech des Außenringes ausgebildet ist,
- einen Bord oder Schulter, wobei der Bord axial zwischen den Laufbahnen um die Rotationsachse verläuft. Der Bord ist ebenfalls einteilig aus dem Material des Außenringes gebildet und steht radial zur Rotationsachse hin oder von der Rotationsachse weg zwischen den Laufbahnen hervor;
- Der Außenring ist schulterseitig massiv ausgefüllt oder wahlweise mit einer Ringnut versehen. Der Außenring ist aufgrund der als Entlastungskehle wirkenden Ringnut in Lastrichtung der Wälzkörper elastisch und hoch belastbar.
- Der Außenring ist zumindest partiell an den Laufbahnen aber auch komplett gehärtet.

Weiterhin zeichnet sich der Außenring durch ein geringes Gewicht aus, da Ausgangsmaterial geringer Wandstärke bzw. geringer Blechdicke eingesetzt ist. Die Stärke bzw. Dicke des Ausgangsmateriales liegt vorzugsweise im Bereich von 2, 4 bis 5 mm. Mit dem dünnwandigen Außenring aus spanabhebender oder spanloser Herstellung ist der Gesamtanteil der Radlagereinheit an dem Gewicht der ungefederten Massen reduziert.

Die Radlagerung für die Lagerung angetriebener und/oder nicht angetriebener Räder an Fahrzeugen ist mit dem Außenring ist so in den Radträger eingebaut, dass der Flansch des Außenringes zum Fahrzeug hin oder vom Fahrzeug weg weist. An Radlagerungen, mit denen angetriebene Räder gelagert werden, liegt der Flansch des Außenringes alternativ entweder an der Seite des Radträgers an, die dem Radflansch zugewandt ist oder der Flansch liegt an einer Seite des Radträgers an, die von dem Radflansch abgewandt ist.

Der Flansch ist vorzugsweise mit Bolzen, die zum Beispiel in den Radträger eingeschraubt oder eingepresst werden, an dem Radträger befestigt. Denkbar sind auch anderer Befestigungselemente, wie Klammern oder ähnliches die den Flansch an einer von dem Radträger axial abgewandten Seite des Flansches an wenigstens einem Befestigungsrand axial hintergreifen. Alternativ dazu, sind an dem Radträger durch Schweißen oder Einschrauben befestigte Bolzen vorgesehen, auf die jeweils eine Mutter aufgeschraubt und gegen den Flansch axial vorgespannt ist. Die Bolzen durchgreifen axiale Ausnehmungen an dem Flansch.

Es sind mit der Erfindung verschiedene Ausgestaltungen des Flansches vorgesehen. Es ist vorgesehen, dass Flansch außen durch eine zylindrische Mantelfläche begrenzt ist. Ein andere Ausgestaltung sieht einen Flansch mit radial hervorstehenden sowie umfangsseitig zueinander benachbarten Abschnitten vor. In wenigstens zwei der Abschnitte erstreckt sich jeweils eine der Ausnehmungen radial zumindest teilweise. Alternativ dazu sind die Ausnehmungen umfangsseitig zwischen den Abschnitten ausgebildet.

Der Flansch weist die Ausnehmungen in Form von axialen Löchern , alternativ, anstelle von Durchgangslöchern, axial durch den Flansch hindurchgehende sowie radial nach außen offene Ausnehmungen für die Befestigung des Flansches an einem Radträger auf. Die Befestigungselemente durchgreifen jeweils eine der Ausnehmungen axial von dem Radträger aus und hintergreifen dann den Flansch am Rand der Ausnehmungen. Der Gewichtsanteil am Gesamtgewicht des Flansches ist somit erheblich reduziert, da das Material eines die Ausnehmungen üblicherweise außen umschließenden Ringabschnittes des Flansches entfällt. Die Ausnehmungen sind, aber auch radial nach außen offene Ausnehmungen.

Eine Ausgestaltung der Erfindung sieht vor, dass die Kontur der nach außen offenen Ausnehmungen kreisbogenförmig verläuft. Es ist sind aber alternativ auch sich radial von außen schlitzartig in Richtung der Rotationsachse des Radlagers erstreckende Ausnehmungen vorgesehen.

Bei der Herstellung eines derartigen Flansches wird zum Beispiel der zunächst mit Durchgangslöchern versehene Flansch von außen solange spanabhebend bearbeitet, bis der überflüssige, die Löcher radial außen begrenzende Anteil an Material von dem Flansch entfernt ist. Alternativ dazu, wird die erfindungsgemäße Kontur des Flansches durch Stanzen erzeugt. Das ist insbesondere dann von Vorteil, wenn der Außenring kalt geformt ist. Eine spanabhebende Entfernen des Randes ist somit überflüssig. Die Ausnehmungen und auch die übrigen radial von außen zugänglichen Abschnitte des Flansches weisen in diesem Fall einen Stanzrand aus einem Stanzvorgang zum Schneiden wenigstens der Ausnehmungen aufweisen.

Der Flansch liegt an dem Radträger vorzugsweise nur abschnittweise axial an. Dabei liegt der Außenring mit einem hohlzylindrischen Abschnitt radial und mit dem Flansch axial so an dem Radträger an, dass der Radträger an der konkaven Kehle, an der der Flansch in den Abschnitt übergeht, nicht anliegt. Die konkave Kontur der Kehle geht dabei, in einem Längsschnitt durch den Außenring entlang der Rotationsachse des Außenringes betrachtet, an einem ersten Übergang beispielsweise in eine Kreisringfläche des Flansches und an einem zweiten Übergang z.B. in eine zylindrische Mantelfläche des Abschnittes über. Der erste und der zweite Übergang enden alternativ dazu zum Beispiel jeweils in einer freistichartig geformten Ringnut in dem Flansch bzw. in dem Abschnitt. Dabei ist von besonderer Bedeutung, das ein senkrechte Abstand zwischen einer gedachten axialen Verlängerung der Mantelfläche des Flansches und dem ersten Übergang kleiner ist als ein zur Rotationsachse paralleler Abstand zwischen einer gedachten radialen Verlängerung der Mantelfläche und dem zweiten Übergang.

Anhand von Versuchen wurde nachgewiesen, dass sich durch diese Gestaltung der Kontur die maximale Kerbspannung in der Kehle durch um ca. 30% reduzieren lässt. Die Kehle ist dabei vorteilhaft durch wenigstens zwei aufeinander folgende Radien zwischen den Übergängen beschrieben. wobei wenigstens ein erster Radius radial an dem Übergang in den Flansch und wenigsten ein zweiter Radius axial an dem Übergang in den ersten Abschnitt übergeht. Die Radien sind in dem Längsschnitt in Richtung der Übergänge entweder durch eine Gerade voneinander getrennt, oder gehen vorzugsweise zwischen dem Flansch und dem Abschnitt ineinander übergehen.

Der Außenring ist zumindest abschnittsweise zumindest radial zur Rotationsachse in dem Radträger so abgestützt, dass der axial endseitig des Außenringes ausgebildete Flansch axial an dem Radträger und radial an dem Außenring anliegt, ohne dass der Träger Kontakt zur Kehle hat. Zusätzliche Spannungen in der Kehle durch den Einfluss von scharfen Kanten des Trägers ist auch durch eine ausreichend dimensionierte Fase an dem Loch vermieden.

Weitere Ausgestaltungen sowie Ausführungsformen der Erfindung sind in den Figuren 1 bis 2 - 2b näher beschrieben. Sie zeigen:
Figur 1 ein Radlagermodul in einem Längsschnitt
Figur 2 den Außenring in einer Vollansicht
Figur 2a Formabweichungen des Außenrings
Figur 2b in vergrößerter Darstellung das Detail Z aus Figur 1.

### Detaillierte Beschreibung der Zeichnungen

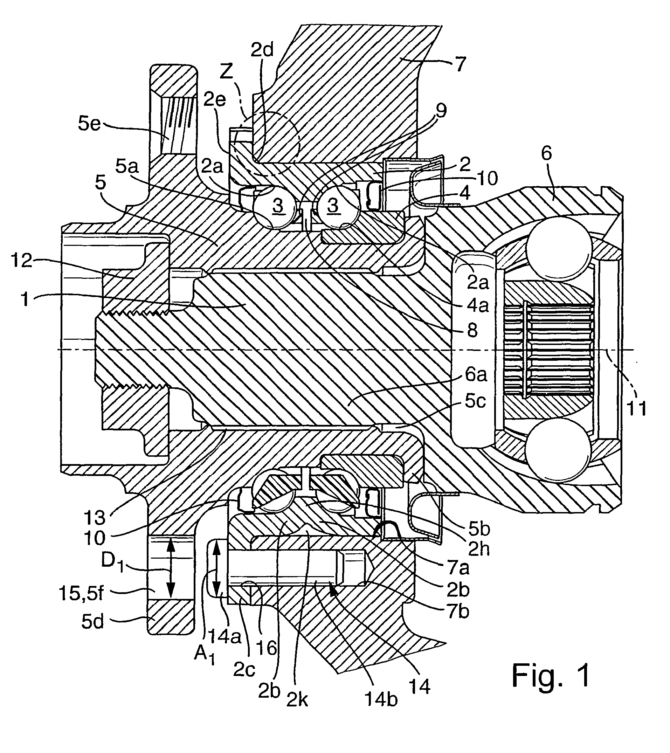

Figur 1 zeigt ein Radlagermodul 1 in einem Längsschnitt entlang einer Rotationsachse 11. Das Radlagermodul ist mit einem Außenring 2, mit zwei Reihen Wälzkörper 3, mit einem Innenring 4, mit einer Nabe 5 und mit einer Gelenkglocke 6 versehen. Die aus den Einzelteilen 2, 3, 4, 5, 6 vormontierte Baueinheit des Radlagermoduls sitzt in einem Radträger 7.

Das Radlager 8 aus dem Außenring 2, den Wälzkörpern 3, in diesem Beispiel in Form von Kugeln, aus Käfigen 9, Dichtungen 10, einem Innenring 4 und aus der Nabe 5 ist in sich selbst haltend vormontiert. Dazu sind die Wälzkörper 3 und der Innenring 4 mittels der Nabe 5 in dem Außenring 2 gehalten. Eine Reihe der Wälzkörper 3 stützt sich dabei an einer Laufbahn 2a des Außenringes 2 und an einer direkt an der Nabe 5 ausgebildeten Laufbahn 5a ab. Die andere Reihe der Wälzkörper 3 ist zwischen einer weiteren Laufbahn 2a und einer Laufbahn 4a des Innenringes 4 angeordnet. Das Radlager 8 ist mittels eines Bördelbordes 5b an der Nabe 5 über den Innenring 4 und den Außenring 2 spielfrei vorgespannt - zumindest dann, wenn das Radlager 8 in dem Radträger 7 montiert ist. Die Nabe 5 ist in diesem Falle über den Bördelbord 5b unlösbar zum Radlager 8 fest.

Die Nabe 5 ist um eine Rotationsachse 11 im wesentlichen rotationssymmetrisch ausgebildet und weist ein axiales Durchgangsloch 5c auf. Ein Stummel 6a an der Gelenkglocke 6 durchgreift das Durchgangsloch 5c axial. Die Gelenkglocke 6 ist über eine Mutter 12 axial an der Nabe 5 gesichert. An der Nabe 5 ist ein radial nach außen weisender Radflansch 5d ausgebildet. Über Zahnprofile 13 an dem Stummel 6a sowie an der Nabe 5 ist eine um die Rotationsachse 11 drehfeste Verbindung zwischen der Gelenkglocke 6 und dem Radflansch 5d hergestellt.

An dem Radflansch 5d sind axiale Löcher 5e ausgebildet, in die nicht dargestellte Radbolzen zur Befestigung eines Fahrzeugesrades eingreifen. Weiterhin weist der Radflansch 5d axiale Ausnehmungen 5f auf, die zumindest einmal pro Umdrehung des Radflansches 5d um die Rotationsachse 11, einem Flansch 2c axial so gegenüber liegen, dass der Radflansch 5d aufgrund der Ausnehmungen 5f das Befestigungselement 14 axial nicht verdeckt. Der Durchmesser D₁ der als axiales Durchgangsloch 15 ausgeführten Ausnehmung 5f ist größer als die größte radiale Abmessung A₁ des Kopfes 14a.

Der Außenring 2 ist aus zwei hohlzylindrischen Abschnitten 2b und aus dem radialen Flansch 2c gebildet. Das Radlager 8 ist über die Abschnitte 2b in einem Loch 7a des Radträgers 7 radial abgestützt. Der Außenring 2 geht an einem der Abschnitte 2b über eine Kehle 2d radial in den Flansch 2c über. Der Flansch 2c liegt axial außen an dem Radträger 7 an und ist an der von dem Radträger 7 axial abgewandten Seite 2e von den Befestigungselementen 14 in Form von Bolzen hintergriffen. Das Befestigungselement 14 ist mit dem Kopf 14a axial fest gegen den Flansch 2c vorgespannt, da ein an dem Bolzen fester Schaft 14b axial in einem Befestigungsloch 7b des Radträgers 7 fest ist. Die Befestigungselemente 14 sind in die Befestigungslöcher 7b wahlweise eingepresst bzw. eingeschraubt.

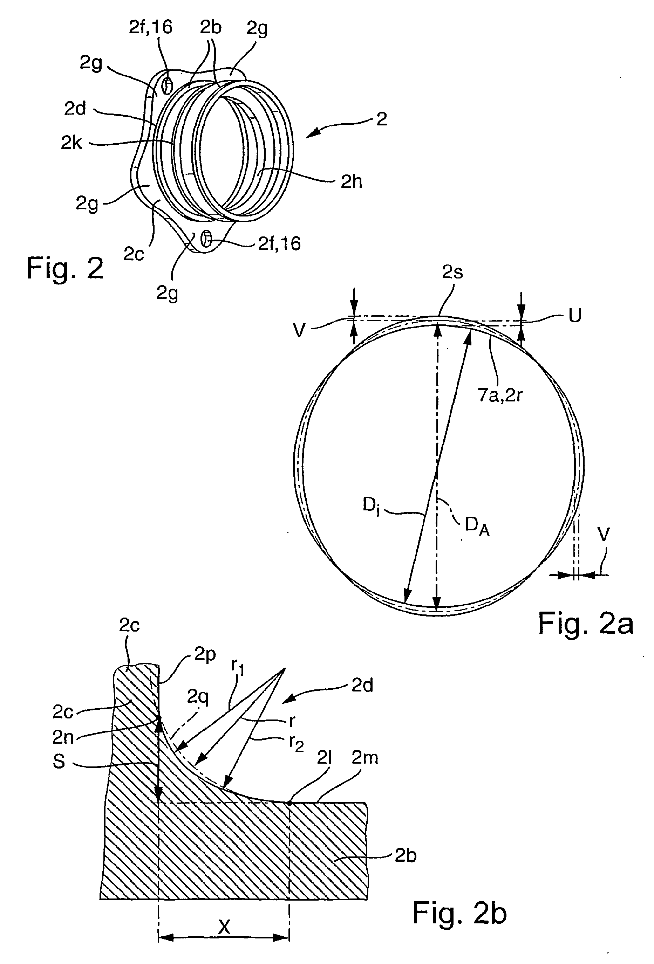

Figur 2 zeigt den Außenring 2 in einer Vollansicht. Der Außenring 2 ist z.B. ein durch Kaltumformen hergestelltes Bauteil, dessen Flansch 2c radial hervorstehende Abschnitte 2g aufweist. In drei der Abschnitte 2g sind die Außennehmungen 2f als axiale Durchgangslöcher 16 eingebracht.

In Figur 2a zeigt die Formabweichungen des Außenringes 2 als Einzelteil im Vergleich zu der Innengeometrie 2r des Loches 7a. Der Außenring 2 weist aufgrund seiner dünnen Wand nach dem Kaltumformen oder nach dem Härten eine fertige Außengeometrie 2r auf, deren Durchmesser D_{A} zunächst um das Übermaß 2 x U größer ist als der Innendurchmesser D_{I} des Loches 7a. Zusätzlich weicht die Außengeometrie 2s um das Maß 2 x V von der Innengeometrie 2r des Loches 7a ab. Nach der Montage des Außenringes 2 in das Loch 7a ist der Außenring 2 soweit eingeschnürt, dass die Außengeometrie 2s dem Durchmesser Dᵢ und der Innengeometrie 2r im wesentlichen entspricht.

Der Außenring 2 weist eine Radialschulter 2h auf. Die Radialschulter 2h ist zwischen den Laufbahnen 2a angeordnet, wobei die Laufbahnen 2a zumindest teilweise an der Radialschulter 2h ausgebildet sind. In den Außenring 2 ist radial von außen eine Ringnut 2k eingebracht. Die Ringnut 2k ist zum einen durch das Verdrängen von Material aus dem Außenring 2 zum Formen der Radialschulter 2h entstanden und verleiht zum anderen dem Außenring 2 im Bereich der Laufbahnen 2a eine gewisse Elastizität. Alternativ ist die Schulter 2h an Stelle der Ringnut vollständig mit dem Material des Außenringes ausgefüllt.

In Figur 2b, einer vergrößerten Darstellung des Details Z aus Figur 1, ist die Kehle 2d stark vergrößert und nicht maßstäblich dargestellt. Die Kehle 2d ist konkav ausgebildet und geht an einem ersten Übergang 2l in eine kreiszylindrische Mantelfläche 2m des Abschnittes 2b über. An dem Flansch 2c geht die Kehle 2d an dem Übergang 2n in eine kreisringförmige Fläche 2p über. Der senkrechte Abstand S zwischen der gedachten axialen Verlängerung der Mantelfläche 2m und dem Übergang 2n ist kleiner als ein zur Rotationsachse 11 paralleler Abstand X zwischen einer gedachten radialen Verlängerung der Kreisringfläche 2p und dem Übergang 2l.

Figur 2b zeigt auch, dass die Kontur der Kehle 2d in einem Längsschnitt durch den Außenring 2 von einer mit Strichpunktlinien dargestellten und durch einen Radius r beschriebenen Kontur 2q abweicht. Die Kehle 2d ist in dem Längsschnitt durch die Radien r₁ und r₂ beschrieben. Der Radius r₁ geht an dem Übergang 2n in den Flansch 2c und der Radius r₂ geht axial an dem Übergang 2l in den Abschnitt 2b über. Die Radien r₁ sowie r₂ gehen zwischen dem Flansch 2c und dem Abschnitt 2b ineinander über.

Der Radträger 7 liegt axial so an dem Flansch 2c und radial an dem Abschnitt 2b so an, dass der Radträger 7 und die Kehle 2d mindestens bis zu den Übergängen 2l und 2n zueinander beabstandet sind. Die Maximalspannungen radial unterhalb der Ausnehmungen 2f sind an der durch den Radius r beschriebenen Kontur 2q etwas um ein Drittel höher als die Spannungen in einer Kehle 2d, die durch die Radien r₁ und r₂ beschrieben ist.

### Bezugszeichen

- 1: Radlagermodul
- 2: Außenring
- 2a: Laufbahn
- 2b: zylindrischer Abschnitt
- 2c: Flansch
- 2d: Kehle
- 2e: Seite
- 2f: Ausnehmung
- 2g: Abschnitt
- 2h: Radialschulter
- 2k: Ringnut
- 2l: Übergang
- 2m: Mantelfläche
- 2n: Übergang
- 2p: Fläche
- 2q: Kontur
- 2r: Innengeometrie
- 2s: Außengeometrie
- 3: Wälzkörper
- 4: Innenring
- 4a: Laufbahn
- 5: Nabe
- 5a: Laufbahn
- 5b: Bördelbord
- 5c: Durchgangsloch
- 5d: Radflansch
- 5e: Löcher
- 5f: Ausnehmung
- 6: Gelenkglocke
- 6a: Stummel
- 7: Radträger
- 7a: Loch
- 8: Radlager
- 9: Käfige
- 10: Dichtung
- 11: Rotationsachse
- 12: Mutter
- 13: Zahnprofil
- 14: Befestigungselement
- 14a: Kopf
- 14b: Schaft
- 15: Loch
- 16: Loch

## Patentansprüche

1. Radlager (8) in Kombination mit einem Radträger (7), wobei das Radlager (8) zumindest einen Außenring (2) und mindestens eine Reihe Wälzkörper (3) aufweist, wobei das Radlager (8) zumindest an einem zylindrischen Abschnitt (2b) des Außenringes (2) zumindest radial zur Rotationsachse (11) in dem Radträger (7) abgestützt ist und an dem zylindrischen Abschnitt (2b) zumindest teilweise eine Laufbahn (2a) für die Reihe Wälzkörper ausgebildet ist, und der Außenring (2) einen radial von der Rotationsachse (11) wegweisenden Flansch (2c) aufweist, wobei der Flansch (2c) axial endseitig des Außenringes (2) ausgebildet und axial an dem Radträger (7) befestigt ist,
**dadurch gekennzeichnet, dass** ein Loch (7a) des Radträgers (7) eine durch spanabhebende Bearbeitung fertige kreiszylindrische Innengeometrie (2r) sowie der Außenring (2), der relativ dünnwandig und somit im Vergleich zu dem steifen, das Loch umgebenden Radträger elastisch ist, vor einer Montage in das Loch (7a), zumindest an dem Zylindrischen Abschnitt (2b) eine fertige Außengeometrie (2s) aufweist, die Außengeometrie (2s) zumindest in einem Durchmesser und in einer Rundheit von der Innengeometrie (2r) abweicht und dabei zumindest der Zylindrische Abschnitt (2b) im Vergleich zu dem Loch (7a) unrund und im Durchmesser größer ist und dass der mit einer Presspassung in dem Loch (7a) sitzende Außenring (2) außen, zumindest an dem Zylindrischen Abschnitt (2b), eine der Innengeometrie (2r) angepasste Geometrie aufweist und dabei zumindest der Zylindrische Abschnitt (2b) radial nach inner eingeschnürt ist sowie dabei der Außenring (2) zumindest an dem Zylindrischen Abschnitt (2b) in dem Loch (7a) genauso rund ist wie das Loch (7a).

2. Radlager nach Anspruch 1, **dadurch gekennzeichnet, dass** der Außenring (2) eine durch Kaltumformen fertige Außengeometrie (2s) aufweist.

3. Radlager nach Anspruch 1, **dadurch gekennzeichnet, dass** der Außenring (2) eine durch Härten fertige Außengeometrie (2s) aufweist.

4. Radlager nach Anspruch 1, **dadurch gekennzeichnet, dass** das Radlager (8) wenigstens einen Innenring (4) aufweist, wobei der Innenring (4) eine Innenringlaufbahn (4a) aufweist.

5. Radlager nach Anspruch 1, **dadurch gekennzeichnet, dass** der Außenring (2) mit dem Flansch (2c) einteilig kalt umgeformt ist.

6. Radlager nach Anspruch 1, **dadurch gekennzeichnet, dass** den Flansch (2c) ein Befestigungselement (14) an einer von dem Radträger (7) axial abgewandten Seite des Flansches (2c) wenigstens axial hintergreift und dabei das Befestigungselement (14) axial fest an dem Flansch (2c) anliegt, wobei das Befestigungselement (14) an dem Radträger (7) fest ist.

7. Radlager nach Anspruch 1, **dadurch gekennzeichnet, dass** das Befestigungselement (14) ein Bolzen mit einem Kopf (14a) ist, wobei der Bolzen mit dem Kopf (14a) axial an dem Flansch (2c) anliegt und dabei axial eine Ausnehmung (2f) des Flansches (2c) durchgreifend an dem Radträger (7) befestigt ist.

8. Radlager nach Anspruch 7, **dadurch gekennzeichnet, dass** die Ausnehmungen (2f) radial nach außen offen sind.

9. Radlager nach Anspruch 7, **dadurch gekennzeichnet, dass** die ersten Ausnehmungen (2f) axial durch den Flansch (2c) hindurchführende Löcher (16) sind.

10. Radlager nach Anspruch 7, **dadurch gekennzeichnet, dass** der Flansch (2c) radial hervorstehende sowie umfangsseitig zueinander benachbarte Abschnitte (2g) aufweist, wobei sich in wenigstens zwei der Abschnitte (2g) jeweils eine der Ausnehmungen (2f) radial zumindest teilweise erstreckt.

11. Radlager nach Anspruch 10, **dadurch gekennzeichnet, dass** der Flansch (2c) eine ungerade Anzahl der radial hervorstehenden Abschnitte (2g) aufweist, wobei zu wenigstens drei der Abschnitte (2g) mit den Ausnehmungen (2f) jeweils einer der Abschnitte (2g) ohne Ausnehmung (2g) benachbart ist.

12. Radlager nach Anspruch 1, **dadurch gekennzeichnet, dass** der Flansch (2c) an dem Radträger (7) zumindest abschnittweise axial anliegt.

13. Radlager nach Anspruch 1, **dadurch gekennzeichnet, dass** zwischen den Reihen Wälzkörpern einteilig mit dem Außenring (2) eine Radialschulter (2h) für die Laufbahn (2a) ausgebildet ist.

14. Radlager nach Anspruch 13, **dadurch gekennzeichnet, dass** der Außenring (2) außen mit einer Ringnut (2k) versehen ist, wobei die Ringnut (2k) sich radial teilweise in die Radialschulter (2h) erstreckt.

15. Radlager nach Anspruch 1, **dadurch gekennzeichnet, dass** der Radträger (7) wenigstens die Laufbahn (2a) des Außenringes (2) umgreift, wobei in dem Außenring (2) eine Nabe (5) über die Wälzkörper (3) an der Laufbahn (2a) um die Rotationsachse (11) drehbar abgestützt ist und wobei der Radflansch (5d) radial von der Nabe abgeht.

## Claims

1. Wheel bearing (8) in combination with a wheel carrier (7), the wheel bearing (8) having at least one outer ring (2), and at least one row of rolling bodies (3), the wheel bearing (8) being supported in the wheel carrier (7) at least on a cylindrical section (2b) of the outer ring (2) at least radially with respect to the rotational axis (11), and a raceway (2a) for the row of rolling bodies is formed at least partially on the cylindrical section (2b), and the outer ring (2) has a flange (2c) which points radially away from the rotational axis (11), the flange (2c) being formed axially on the end side of the outer ring (2), and being fastened axially to the wheel carrier (7),
**characterized in that** a hole (7a) of the wheel carrier (7) has a circularly cylindrical internal geometry (2r) which is finished by material removing machining, and the outer ring (2), which is comparatively thin-walled and is therefore flexible in comparison with the stiff wheel carrier surrounding the hole, before assembly in the hole (7a), has a finished external geometry (2s) at least on the cylindrical section (2b), the external geometry (2s) differs from the internal geometry (2r) at least in a diameter and in a roundness, and at least the cylindrical section (2b) here is unround and of greater diameter compared with the hole (7a), and **in that** the outer ring (2) which is seated in the hole (7a) with a press fit has a geometry which is adapted to the internal geometry (2r) on the outside, at least on the cylindrical section (2b), and at least the cylindrical section (2b) is constricted here radially toward the inside and the outer ring (2) is as round as the hole (7a) here, at least on the cylindrical section (2b) in the hole (7a).

2. Wheel bearing according to Claim 1,
**characterized in that** the outer ring (2) has an external geometry (2s) which is finished by cold forming.

3. Wheel bearing according to Claim 1,
**characterized in that** the outer ring (2) has an external geometry (2s) which is finished by hardening.

4. Wheel bearing according to Claim 1,
**characterized in that** the wheel bearing (8) has at least one inner ring (4), the inner ring (4) having an inner ring raceway (4a).

5. Wheel bearing according to Claim 1,
**characterized in that** the outer ring (2) is cold formed in one piece with the flange (2c).

6. Wheel bearing according to Claim 1,
**characterized in that** a fastening element (14) engages at least axially behind the flange (2c) on a side of the flange (2c) which faces axially away from the wheel carrier (7), and the fastening element (14) bears axially fixedly against the flange (2c) in the process, the fastening element (14) being fixed to the wheel carrier (7).

7. Wheel bearing according to Claim 1,
**characterized in that** the fastening element (14) is a bolt with a head (14a), the bolt bearing axially against the flange (2c) with the head (14a) and being fastened to the wheel carrier (7) in the process in a manner which reaches axially through a recess (2f) of the flange (2c).

8. Wheel bearing according to Claim 7,
**characterized in that** the recesses (2f) are open radially to the outside.

9. Wheel bearing according to Claim 7,
**characterized in that** the first recesses (2f) are holes (16) which lead axially through the flange (2c).

10. Wheel bearing according to Claim 7,
**characterized in that** the flange (2c) has sections (2g) which protrude radially and are adjacent to one another circumferentially, in each case one of the recesses (2f) extending radially at least partially in at least two of the sections (2g).

11. Wheel bearing according to Claim 10,
**characterized in that** the flange (2c) has an odd number of radially protruding sections (2f), in each case one of the sections (2g) without a recess (2f) being adjacent to at least three of the sections (2g) with the recesses (2f).

12. Wheel bearing according to Claim 1,
**characterized in that** the flange (2c) bears axially against the wheel carrier (7) at least in sections.

13. Wheel bearing according to Claim 1,
**characterized in that** a radial shoulder (2h) for the raceway (2a) is formed in one piece with the outer ring (2) between the rows of rolling bodies.

14. Wheel bearing according to Claim 13,
**characterized in that** the outer ring (2) is provided on the outside with an annular groove (2k), the annular groove (2k) extending radially partially into the radial shoulder (2h).

15. Wheel bearing according to Claim 1,
**characterized in that** the wheel carrier (7) engages around at least the raceway (2a) of the outer ring (2), a hub (5) being supported in the outer ring (2) via the rolling bodies (3) on the raceway (2a) in such a way that it can rotate about the rotational axis (11), and the wheel flange (5d) leading radially from the hub.

## Revendications

1. Palier de roue (8) en combinaison avec un support de roue (7), le palier de roue (8) présentant au moins une bague extérieure (2) et au moins une rangée de corps de roulement (3), le palier de roue (8) étant supporté au moins au niveau d'une portion cylindrique (2b) de la bague extérieure (2) au moins radialement par rapport à l'axe de rotation (11) dans le support de roue (7), et un chemin de roulement (2a) pour la rangée de corps de roulement étant réalisé au moins en partie sur la portion cylindrique (2b), la bague extérieure (2) présentant une bride (2c) tournée radialement à l'opposé de l'axe de rotation (11), la bride (2c) étant réalisée axialement du côté de l'extrémité de la bague extérieure (2) et étant fixée axialement sur le support de roue (7), **caractérisé en ce qu'**un trou (7a) du support de roue (7) présente une géométrie interne (2r) cylindrique circulaire fabriquée par usinage par enlèvement de copeaux, et la bague extérieure (2), qui a des parois relativement minces et qui est donc élastique par rapport au support de roue rigide entourant le trou, présente une géométrie externe (2s) finie, avant un montage dans le trou (7a), au moins au niveau de la portion cylindrique (2b), la géométrie extérieure (2s) s'écarte, au moins en ce qui concerne son diamètre et sa rotondité, de la géométrie interne (2r) et en l'occurrence au moins la portion cylindrique (2b) n'est pas ronde par comparaison avec le trou (7a) et a un diamètre plus grand, et **en ce que** la bague extérieure (2) reposant avec un ajustement serré dans le trou (7a), au moins au niveau de la portion cylindrique (2b), présente une géométrie adaptée à la géométrie interne (2r) et en l'occurrence au moins la portion cylindrique (2b) est rétrécie radialement vers l'intérieur et en l'occurrence également la bague extérieure (2), au moins au niveau de la portion cylindrique (2b) dans le trou (7a), est exactement aussi ronde que le trou (7a).

2. Palier de roue selon la revendication 1,
**caractérisé en ce que** la bague extérieure (2) présente une géométrie extérieure (2s) fabriquée par façonnage à froid.

3. Palier de roue selon la revendication 1,
**caractérisé en ce que** la bague extérieure (2) présente une géométrie extérieure (2s) fabriquée par trempage.

4. Palier de roue selon la revendication 1,
**caractérisé en ce que** le palier de roue (8) présente au moins une bague intérieure (4), la bague intérieure (4) présentant un chemin de roulement de bague intérieure (4a).

5. Palier de roue selon la revendication 1,
**caractérisé en ce que** la bague extérieure (2) est façonnée à froid d'une seule pièce avec la bride (2c).

6. Palier de roue selon la revendication 1,
**caractérisé en ce qu'**un élément de fixation (14) vient en prise par l'arrière au moins axialement avec la bride (2c) au niveau d'un côté de la bride (2c) opposé axialement au support de roue (7), et en l'occurrence l'élément de fixation (14) s'applique axialement fixement contre la bride (2c), l'élément de fixation (14) étant fixé au support de roue (7).

7. Palier de roue selon la revendication 1,
**caractérisé en ce que** l'élément de fixation (14) est un boulon ayant une tête (14a), le boulon avec la tête (14a) s'appliquant axialement contre la bride (2c) et en l'occurrence étant fixé axialement au support de roue (7) en s'engageant à travers un évidement (2f) de la bride (2c).

8. Palier de roue selon la revendication 7,
**caractérisé en ce que** les évidements (2f) sont ouverts radialement vers l'extérieur.

9. Palier de roue selon la revendication 7,
**caractérisé en ce que** les premiers évidements (2f) sont des trous (16) guidés axialement à travers la bride (2c).

10. Palier de roue selon la revendication 7,
**caractérisé en ce que** la bride (2c) présente des portions (2g) saillant radialement et adjacentes l'une à l'autre du côté de la périphérie, l'un des évidements (2f) s'étendant au moins en partie radialement dans au moins deux des portions (2g).

11. Palier de roue selon la revendication 10,
**caractérisé en ce que** la bride (2c) présente un nombre impair de portions (2g) saillant radialement, à chaque fois l'une des portions (2g) sans évidement (2f) étant adjacente à au moins trois des portions (2g) avec les évidements (2f).

12. Palier de roue selon la revendication 1,
**caractérisé en ce que** la bride (2c) s'applique au moins en partie axialement contre le support de roue (7).

13. Palier de roue selon la revendication 1,
**caractérisé en ce qu'**entre les rangées de corps de roulement est réalisé d'une seule pièce avec la bague extérieure (2), un épaulement radial (2h) pour le chemin de roulement (2a).

14. Palier de roue selon la revendication 13,
**caractérisé en ce que** la bague extérieure (2) est pourvue à l'extérieur d'une rainure annulaire (2k), la rainure annulaire (2k) s'étendant radialement en partie dans l'épaulement radial (2h).

15. Palier radial selon la revendication 1,
**caractérisé en ce que** le support de roue (7) vient en prise au moins autour du chemin de roulement (2a) de la bague extérieure (2), un moyeu (5) étant supporté dans la bague extérieure (2) par le biais des corps de roulement (3) sur le chemin de roulement (2a) de manière à pouvoir tourner autour de l'axe de rotation (11) et la bride de roue (5d) saillant radialement depuis le moyeu.
